# EUROPÄISCHE PATENTSCHRIFT

(11) **EP 3 829 944 B1**
(45) Veröffentlichungstag und Bekanntmachung des Hinweises auf die Patenterteilung: **09.08.2023**
(21) Anmeldenummer: 19739913.2
(22) Anmeldetag: 27.06.2019
(51) Int. Cl.: B60T 8/1766, B60T 8/26, B60T 8/88, B60T 13/26, B60T 13/68

(54) **VERFAHREN ZUM AUTOMATISIERTEN ELEKTRONISCHEN STEUERN EINES BREMSSYSTEMS IN EINEM NUTZFAHRZEUG MIT ABS SICHERUNG**
METHOD FOR THE AUTOMATED ELECTRONIC CONTROL OF A BRAKE SYSTEM IN A UTILITY VEHICLE HAVING ANTI-LOCK BRAKING PROTECTION
PROCÉDÉ POUR LA COMMANDE ÉLECTRONIQUE AUTOMATISÉE D'UN SYSTÈME DE FREINAGE DANS UN VÉHICULE UTILITAIRE DOTÉ D'UN DISPOSITIF DE SÉCURITÉ ANTIBLOCAGE

(30) Priorität: 01.08.2018 DE 102018118720
(43) Veröffentlichungstag der Anmeldung: 09.06.2021
(73) Patentinhaber: ZF CV Systems Europe BV, 1170 Brussels (BE)
(72) Erfinder: PLÄHN, Klaus, 30926 Seelze (DE); VAN THIEL, Julian, 30938 Großburgwedel (DE)
(74) Vertreter: Rabe, Dirk-Heinrich
(86) Internationale Anmeldenummer: PCT/EP2019/067128
(87) Internationale Veröffentlichungsnummer: WO 2020/025226

(56) Entgegenhaltungen:
- DE-A1- 19 733 379
- DE-A1-102016 005 317
- DE-A1-102016 005 318
- DE-A1-102016 113 249
- DE-B4- 19 733 379

## Beschreibung

Die Erfindung betrifft ein Verfahren zum automatisierten elektronischen Steuern eines Bremssystems in einem Fahrzeug, insbesondere Nutzfahrzeug, insbesondere in einem automatisiert steuerbaren Nutzfahrzeug. Die Erfindung betrifft ferner ein elektronisch steuerbares pneumatisches Bremssystem für ein Fahrzeug, insbesondere Nutzfahrzeug, insbesondere automatisiert steuerbarem Nutzfahrzeug sowie ein derartiges Fahrzeug.

In Fahrzeugen, insbesondere Nutzfahrzeugen, mit einem pneumatischen Bremssystem, insbesondere ausgebildet als elektronisches Betriebsbremssystem (EBS), können zum Aussteuern von Bremsdrücken von einer Steuereinrichtung (ECU) elektronisch Steuerventile, beispielsweise Relaisventile oder Achsmodulatoren, angesteuert werden, die dann in Abhängigkeit einer angeforderten Fahrzeug-Soll-Beschleunigung pneumatisch einen Bremsdruck an die Bremszylinder von Betriebsbremsen des Bremssystems aussteuern. Dem elektronisch ausgesteuerten pneumatischen Bremsdruck überlagert ist die Aussteuerung eines Bremsdruckes in Abhängigkeit einer Betätigung eines Bremskraftreglers bzw. Bremswertgebers über ein Bremspedal durch den Fahrer, so dass der Fahrer in einem automatisiert gesteuerten Fahrzeug im Notfall auch selbst noch eine Notbremsung vollziehen kann und/oder den elektronisch ausgesteuerten Bremsdruck übersteuern kann.

Bei solchen redundanten Bremssystemen, bei denen der Fahrer, falls das elektronische Betriebsbremssystem (EBS) ausfällt, den Bremsdruck pneumatisch beispielsweise über ein Bremspedal aussteuern kann, ist in diesem Fall auch eine Antiblockiersystem-Funktion (ABS) nicht oder nur eingeschränkt funktionsfähig und somit ein Blockieren von Fahrzeugachsen nicht ausgeschlossen. Hierunter leidet die Stabilität des Fahrzeugs. Wünschenswert ist, dass die Stabilität des Fahrzeugs auch in einem solchen redundanten Fall weitgehend beibehalten wird. Ein ähnliches Problem besteht bei automatisiert steuerbaren Nutzfahrzeugen, insbesondere der höheren Automatisierungsgrade (Level 3 bis 5), bei denen das Problem des Blockierens bereits dann auftritt, wenn beispielsweise ein Raddrehzahlsensor ausfällt und so ein Schlupf nicht mehr zuverlässig ermittelt werden kann. Bisherige Lösungen sehen in einem solchen Fall insbesondere redundante Raddrehzahlsensoren, oder redundant verdrahtete Raddrehzahlsensoren vor. Solche Lösungen sind aber aufgrund der zusätzlichen Komponenten und dem zusätzlichen Montageaufwand mit höheren Kosten verbunden.

Eine Alternative hierzu ist eine sogenannte "Stotterbremse" einzusetzen, die ebenfalls ein Blockieren von Achsen verhindert. Allerdings leidet hierdurch der Komfort des Fahrzeugs.

Aus DE 10 2014 006 615 A1 ist beispielsweise ein pneumatisches Bremssystem mit einer Betriebsbremseinrichtung bekannt, die einen Bremswertgeber zum elektrischen Ausgeben einer Bremsanforderung aufweist, beispielsweise in Abhängigkeit einer Bremspedalbetätigung. Weiterhin ist eine Parkbremseinrichtung vorgesehen, die insbesondere die Radbremsen der Hinterachse betätigen kann. Der Bremswertgeber der Betriebsbremseinrichtung ist über eine Datenleitung mit der Parkbremseinrichtung verbunden, sodass im Falle eines elektrischen Defekts in der Betriebsbremseinrichtung eine vom Fahrer angeforderte Bremsung auch über die Parkbremseinrichtung an der Hinterachse erfolgen kann. Dadurch wird eine Redundanz ausgebildet. Nachteilig hieran ist, dass das Fahrzeug im Redundanzfall lediglich mit der Parkbremse an der Hinterachse abgebremst wird, sodass sich eine ungünstige Bremskraftverteilung sowie eine begrenzte Bremswirkung ergeben.

Eine weitere Lösung sieht ein elektronisch steuerbares pneumatisches Bremssystem vor, das mindestens zwei Bremskreise aufweist, wobei mindestens einem der mindestens zwei Bremskreise ein elektrisch und pneumatisch steuerbares Steuerventil und einem weiteren der mindestens zwei Bremskreise ein elektrisch steuerbares Parkbremsventil zugeordnet ist, zum Vorgeben von Bremsdrücken zur Aussteuerung von Radbremsen des jeweiligen Bremskreises. Eine erste Steuereinheit ist dazu vorgesehen und ausgebildet, das jeweilige Steuerventil in Abhängigkeit einer automatisiert angeforderten Fahrzeug-Soll-Verzögerung oder einer vom Fahrer vorgegebenen Betätigung über eine Betätigungsvorrichtung elektrisch anzusteuern. Eine zweite Steuereinheit ist vorgesehen und dazu ausgebildet, das Parkbremsventil in Abhängigkeit der automatisiert angeforderten Fahrzeug-Soll-Verzögerung elektrisch zu steuern, wenn eine elektrische Ansteuerung des jeweiligen Steuerventils verhindert ist, zum Ausbilden einer elektronisch-pneumatisch gesteuerten Redundanz. Das Bremssystem zeichnet sich dadurch aus, dass weiterhin mindestens ein einem Steuerventil zugeordnetes Bypass-Ventil vorgesehen ist, das ausgebildet ist, das zugeordnete Steuerventil pneumatisch anzusteuern, wobei die pneumatische Ansteuerung in Abhängigkeit der automatisiert angeforderten Fahrzeug-Soll-Verzögerung oder in Abhängigkeit der von dem Fahrer vorgegebenen Betätigung der Betätigungsvorrichtung erfolgt, wenn eine elektrische Ansteuerung des jeweiligen Steuerventils verhindert ist, zum Erweitern der elektronisch-pneumatisch gesteuerten Redundanz. Demnach ist folglich vorgesehen, in einem elektronisch steuerbaren pneumatischen Bremssystem, in dem durch eine elektronische Vorgabe einer Fahrzeug-Soll-Verzögerung, insbesondere eine negative Beschleunigung, ein automatisiertes Fahren, insbesondere ein automatisiertes Abbremsen, ermöglicht wird, eine elektronisch-pneumatische Rückfallebene bzw. Redundanz dadurch auszubilden, dass ergänzend zu einer ersten Steuereinheit, die mindestens ein einem Bremskreis zugeordnetes elektrisch und pneumatisch steuerbares Steuerventil elektrisch ansteuert, eine zweite Steuereinheit vorgesehen ist, über die insbesondere im Redundanzfall eine elektrische Steuerung eines Parkbremsventils und eine elektrischpneumatische Ansteuerung des Steuerventils über einen Bypass-Ventil erfolgen kann. Der Redundanzfall tritt in diesem Fall insbesondere dann ein, wenn eine elektrische Ansteuerung des Steuerventils über die erste Steuereinheit verhindert ist.

### Austauschseite 3a (einzufügen auf Seite 3 nach dem letzten Absatz)

Die DE19733379A1 offenbart ein Verfahren und einer Vorrrichtung zur Steuerung einer Bremsanlage, die von einer Steuereinheit gesteuert wird, wobei die Steuereinheit Sollgrößen zur Einstellung an den Radbremsen über einen CAN Bus von einer anderen Steuereinheit empfängt, wobei auf der Basis dieser Sollgrößen Ansteuersignale für den Radbremsen zugeordneten Stellelementen gebildet wird, so dass die entsprechenden Istgrößen sich den Sollgrößen annähern, wobei im Fehlerfall bei nicht zur Verfügung stehenden Sollgrößen durch die andere Steuereinheit des Fahrzeugs die entsprechenden Sollgrößen nach Maßgabe einer vorgegebenen Bremskraftverteilung zwischen Vorder- und Hinterachse in dieser Steuereinheit gebildet werden.

Die DE 10 2016 005318 A1 offenbart eine elektronisch geregelte Ansteuerung für ein pneumatisches Bremssystem sowie ein Verfahren zum elektronischen Regeln des pneumatischen Bremssystems, die mit wenig Aufwand eine sichere und zuverlässige redundante Bremsung insbesondere in einem automatisiert steuerbaren Fahrzeug gewährleisten.

In Abgrenzung hierzu verfolgt die vorliegende Erfindung aber einen anderen Weg und stellt sich zur Aufgabe, auch in einem Redundanzfall, insbesondere bei einer manuellen Aussteuerung eines Bremsanforderungs-Signals, eine wenigstens rudimentäre Antiblockiersteuerung zu erreichen.

Die Erfindung löst die Aufgabe in einem ersten Aspekt durch ein Verfahren zum automatisierten elektronischen Steuern eines Bremssystems in einem Fahrzeug, insbesondere Nutzfahrzeug, nach Anspruch 1 sowie in einem zweiten Aspekt der Erfindung durch ein elektronisch steuerbares Bremssystem nach Anspruch 14. Bevorzugte Weiterbildungen sind in den Unteransprüchen angegeben.

Erfindungsgemäß ist demnach vorgesehen, in einem elektronisch steuerbaren Bremssystem, ein Bremsanforderungs-Signal zum automatisierten elektronischen Ansteuern von Bremsen in dem Fahrzeug einzulesen. Über das Bremsanforderungs-Signal werden von den Bremsen des Fahrzeugs umzusetzende Anforderungen zum Bewirken einer automatisiert angeforderten Fahrzeug-Soll-Längsdynamik übertragen. Das heißt, über das Bremsanforderungs-Signal werden beispielsweise eine Sollgeschwindigkeit und/oder eine Sollbeschleunigung übertragen. Ferner umfasst das Verfahren ein Ermitteln einer Bremsdruckverteilung, die ein Verhältnis eines Vorderachs-Bremsdrucks einer Vorderachse und eines Hinterachs-Bremsdrucks einer Hinterachse angibt. Diese Bremsdruckverteilung kann beispielsweise in einem Zentralmodul ermittelt werden, basierend auf Daten von beispielsweise Raddrehzahlsensoren, einer Beladung des Fahrzeugs, einer Last eines eventuellen Anhängers und dergleichen. Über die Bremsdruckverteilung kann eine Blockierreihenfolge von Achsen festgelegt werden.

Das Verfahren umfasst ferner ein Bereitstellen wenigstens eines ersten Bremsdrucksignals von einer ersten elektronischen Steuereinheit an wenigstens einer ersten elektropneumatischen Steuereinrichtung unter Berücksichtigung des Brems-Anforderungs-Signals und der Bremsdruckverteilung zum Aussteuern wenigstens des Vorderachs-Bremsdrucks und des Hinterachs-Bremsdrucks.

Die Vorderachs- und Hinterachs-Bremsdrücke werden unter Berücksichtigung der Bremsdruckverteilung sowie basierend auf dem Bremsanforderungs-Signal, das beispielsweise von einer Einheit autonomes Fahren Bereitgestellt wird, ermittelt. Vorzugsweise kann vorgesehen sein, dass das erste Bremsdrucksignal für die Vorderachse und ein zweites Bremsdrucksignal bereitgestellt wird, das für die Hinterachse vorgesehen ist.

Ferner umfasst das Verfahren den Schritt: Empfangen der Bremsdruckverteilung an einer zweiten elektronischen Steuereinheit und Speichern der erfassten Bremsdruckverteilung und, für den Fall, dass das Bremsanforderungs-Signal nicht oder nicht richtig verarbeitet oder eingelesen werden kann: Empfangen des Bremsanforderungs-Signals oder eines redundanten Bremsanforderungs-Signals an der zweiten elektronischen Steuereinheit, und in Antwort auf den Empfang des Bremsanforderungs-Signals oder des redundanten Bremsanforderungs-Signals an der zweiten elektronischen Steuereinheit, Aussteuern eines redundanten Vorderachs-Bremsdrucks und eines redundanten Hinterachs-Bremsdrucks unter Berücksichtigung der gespeicherten Bremsdruckverteilung.

Der Erfindung liegt somit die Erkenntnis zugrunde, dass für den Fall, dass das Bremsanforderungs-Signal nicht oder nicht richtig verarbeitet oder eingelesen werden kann, entweder dieses über eine zweite elektronische Steuereinheit verarbeitet wird, oder ein redundantes Bremsanforderungs-Signal, beispielsweise von einem manuell betätigbaren Bremspedal, empfangen wird, und zur Verarbeitung dieser Signale die zuletzt empfangene und gespeicherte Bremsdruckverteilung verwendet wird. Die Bremsdruckverteilung wird üblicherweise über einen Fahrzeugbus bereitgestellt, und die zweite elektronische Steuereinheit wird erfindungsgemäß dazu verwendet, diese Bremsdruckverteilung aus dem beispielsweise Fahrzeugbus auszulesen und entweder selbst zu speichern, oder eine weitere Steuereinheit dazu zu veranlassen, diese zu speichern.

Auch wenn die zuletzt verwendete Bremsdruckverteilung zwar in der Regel für die aktuelle Fahrsituation (im Redundanzfall) nicht optimal abgestimmt ist, kann diese dennoch als Anhaltspunkt verwendet werden und wenigstens eine rudimentäre Absicherung bieten und eine bremsdruckverteilungsgerechte Aussteuerung von redundanten Vorderachs- und Hinterachs-Bremsdrücken erlauben. Hierdurch kann ein Blockieren von Achsen verhindert werden, bzw. die Reinfolge der Blockierung vorgegeben werden, wodurch die Fahrzeugstabilität erhöht werden kann.

Das Aussteuern des redundanten Vorderachs-Bremsdrucks und des redundanten Hinterachs-Bremsdrucks erfolgt dabei nicht nur unter Berücksichtigung der gespeicherten Bremsdruckverteilung, sondern auch unter Berücksichtigung des an der zweiten elektronischen Steuereinheit empfangenen Bremsanforderungs-Signals oder des redundanten Bremsanforderungs-Signals. Die Aussteuerung der redundanten Hinterachs- und Vorderachs-Bremsdrücke kann einerseits durch die erste elektropneumatische Steuereinrichtung erfolgen, wenn diese entsprechende Signale von der zweiten elektronischen Steuereinheit empfängt, durch die zweite elektropneumatische Steuereinrichtung, oder auch durch die zweite elektronische Steuereinheit direkt.

Vorzugsweise ist in diesem Verfahren vorgesehen, dass die Bremsdruckverteilung an der zweiten Steuereinheit kontinuierlich erfasst und gespeichert wird. Unter dem Begriff kontinuierlich soll auch ein quasi-kontinuierliches Erfassen und speichern gefasst werden, welches beispielsweise mit einer Erfassungsrate von 1 Hz die Bremsdruckverteilung erfasst und speichert.

Alternativ kann auch vorgesehen sein, dass die Bremsdruckverteilung nach Fahrbeginn einmalig erfasst und gespeichert wird. Es kann vorzugsweise vorgesehen sein, dass das Speichern der Bremsdruckverteilung erst nach abgeschlossenem Einlernvorgang erfolgt.

In einer weiteren bevorzugten Ausführungsform umfasst das Verfahren die Schritte: Empfangen eines Bremsdruckniveaus an der zweiten elektronischen Steuereinheit und Speichern des erfassten Bremsdruckniveaus; und für den Fall, dass das Bremsanforderungs-Signal nicht oder nicht richtig verarbeitet oder eingelesen werden kann: Aussteuern des redundanten Vorderachs-Bremsdrucks und des redundanten Hinterachs-Bremsdrucks unter Berücksichtigung des gespeicherten Bremsdruckniveaus. Auf diese Weise wird nicht nur die Bremsdruckverteilung gespeichert und berücksichtigt beim Aussteuern der redundant Vorderachs- und Hinterachs-Bremsdrücke, sondern auch das Bremsdruckniveau. Für den Fall, dass beispielsweise ein Fahrer in dem Redundanzfall ein Bremspedal betätigt, kann auch das zuvor verwendete Bremsdruckniveau mitberücksichtigt werden, um die redundanten Vorderachs- und Hinterachs-Bremsdrücke auszusteuern. Auch hierdurch wird ein Blockieren von Fahrzeugachsen weiter verhindert. Die Fahrzeugstabilität kann erhöht werden.

Wiederum kann das Bremsdruckniveau an der zweiten Steuereinheit kontinuierlich erfasst und gespeichert werden, wobei wiederum auch ein quasi-kontinuierliches Erfassen und Speicher mit umfasst sein soll. Das Aussteuern der redundanten Vorderachs- und Hinterachs-Bremsdrücke erfolgt dann nicht nur basierend auf dem Bremsdruckniveau, sondern auch auf dem Bremsanforderungs-Signal, bzw. redundanten Bremsanforderungs-Signal, und vorzugsweise basierend auf der Bremsdruckverteilung.

Weiterhin ist bevorzugt, dass, für den Fall, dass das Bremsanforderungs-Signal nicht oder nicht richtig verarbeitet oder eingelesen werden kann, ein Timeout-Signal und/oder ein übermitteltes Fehlerzustandssignal an der zweiten elektronischen Steuereinheit erfasst wird. Vorzugsweise werden Botschaften der Betriebsbremse auf ein solches Timeoutsignal und/oder Fehlerzustandssignal hin überwacht. Das Timeout-Signal und/oder Fehlerzustandssignal kann also dazu verwendet werden, die Aussteuerung des redundanten Bremsanforderungs-Signals oder dessen Verarbeitung auszulösen. Auch kann das Timeout-Signal und/oder Fehlerzustandssignal dazu verwendet werden, ein erneutes Speichern der aktuellen Bremsdruckverteilung und/oder des aktuellen Bremsdruckniveaus auszulösen, die dann im Folgenden für die Aussteuerung der redundanten Vorderachs- und Hinterachs-Bremsdrücke verwendet werden können. Sobald anstelle des Timeout-Signals bzw. Fehlerzustandssignals wieder ein Signal empfangen wird, dass das ordnungsgemäße Arbeiten der Betriebsbremsen anzeigt, kann in den Normalbetrieb zurückgekehrt werden.

In einer bevorzugten Weiterbildung ist vorzugsweise vorgesehen, dass an der zweiten elektronischen Steuereinheit die Antriebsausgangsdrehzahl empfangen wird, und ein Schlupf der angetriebenen Achse basierend auf der empfangenen Antriebsausgangsdrehzahl ermittelt wird. Als Antriebsausgangsdrehzahl wird vorzugsweise eine Ausgangsdrehzahl eines Getriebes verwendet. Über eine Auswertung der Gradienten kann eine Schlupfindikation für die Antriebsachse ermittelt werden. Basierend auf dem Schlupf der angetriebenen Achsen und in Kombination mit der abgespeicherten Bremsdruckverteilung und vorzugsweise dem Bremsdruckniveau kann dann der Vorderachs- bzw. Hinterachs-Bremsdruck, insbesondere der redundante Vorderachs- oder Hinterachs-Bremsdruck angepasst werden, um ein Blockieren der Achse zu verhindern.

Weiterhin ist bevorzugt, dass die gespeicherte Bremsdruckverteilung erst dann durch eine erfasste Bremsdruckverteilung in dem Speicher überschrieben wird, wenn wieder ein gültiges Bremsanforderungs-Signal eingelesen und richtig verarbeitet wird. Hierdurch kann vermieden werden, dass fehlerhaft identifizierte Bremsdruckverteilungen gespeichert werden, die während eines Redundanzbetriebs ermittelt, verwendet oder erfasst werden.

Das redundante Bremsanforderungs-Signal wird vorzugsweise von einem Parkbremsschalter, einem Bremspedal oder einer weiteren elektronischen Steuereinheit bereitgestellt. Bei Fahrzeugen mit einem niedrigeren Automatisierungsgrad wird das redundante Bremsanforderungs-Signal vorzugsweise von einem Parkbremsschalter oder einem Bremspedal bereitgestellt. Ein Parkbremsschalter ist ein Schalter in der Fahrerkabine, über den der Fahrzeugführer Parkbremsen einlegen kann. Im Redundanzfall werden solche Parkbremsschalter häufig zum zusätzlichen Abbremsen verwendet. Ein Bremspedal wird ebenfalls manuell betätigt und kann ein elektronisches und/oder ein pneumatisches Bremsanforderungs-Signal aussteuern. Bei Fahrzeugen mit einem höheren Automatisierungsgrad kann vorgesehen sein, dass eine weitere elektronische Steuereinheit vorgesehen ist, die dann im Redundanzfall, wenn die Steuereinheit für autonomes Fahren kein Bremsanforderungs-Signal ausgibt oder dieses nicht richtig verarbeitet werden kann, ein redundantes Bremsanforderungs-Signal bereitstellt.

Im Rahmen des Verfahrens ist vorzugsweise ferner vorgesehen, dass das Einlesen des Bremsanforderungs-Signals von der ersten elektronischen Steuereinheit ausgeführt wird, und wobei die erste elektronische Steuereinheit die Bremsdruckverteilung empfängt oder basierend auf empfangenen Daten und/oder internen Daten ermittelt und die ermittelte Bremsdruckverteilung bereitstellt. Das Bremsanforderungs-Signal kann je nach Quelle beispielsweise über einen Fahrzeugbus, einen separaten Bus, oder einen anderen Kanal, wie eine direkte Verkabelung eingelesen werden. Beispielsweise sind Bremswertgeber und/oder Parkbremsschalter in der Regel direkt an die erste elektronische Steuereinheit angeschlossen, sodass eine Bereitstellung über den Fahrzeugbus nicht notwendig ist. Gegebenenfalls kann das Bremsanforderungs-Signal von der ersten elektronischen Steuereinheit über den Fahrzeugbus weitergegeben werden. Wenn die erste elektronische Steuereinheit die Bremsdruckverteilung ermittelt, wird dies vorzugsweise unter Verwendung von externen Daten, wie beispielsweise der Achslast ausgeführt, die beispielsweise über den Fahrzeugbus oder einen anderen Kanal empfangen werden, als auch unter Verwendung von internen Daten aus dem Bremssystem, wie insbesondere Radgeschwindigkeiten, Schlupf, etc. Diese internen Daten werden in der Regel nicht über den Fahrzeugbus empfangen, sondern direkt von Sensoren oder weiteren Einheiten in dem Bremssystem bereitgestellt.

In Ausführungsformen kann vorgesehen sein, dass das Bremsanforderungs-Signal bereits die Bremsdruckverteilung enthält, diese jedoch aus dem Bremsanforderungs-Signal durch die erste elektronische Steuereinheit isoliert wird.

Vorzugsweise ist auch die zweite elektronische Steuereinheit mit einem weiteren Bus oder dem Fahrzeugbus verbunden und die zweite elektronische Steuereinheit empfängt die Bremsdruckverteilung über den weiteren Bus oder den Fahrzeugbus.

Vorzugsweise ist die zweite elektronische Steuereinheit dazu eingerichtet, basierend auf dem empfangenen redundanten Bremsanforderungs-Signal oder dem Bremsanforderungs-Signal, an wenigstens einer zweiten elektropneumatischen Steuereinrichtung und/oder der ersten elektropneumatischen Steuereinrichtung Schaltsignale bereitzustellen, derart, dass die zweite elektropneumatische Steuereinrichtung und/oder die erste elektropneumatische Steuereinrichtung wenigstens einen des redundanten Vorderachs-Bremsdrucks und des redundant redundanten Hinterachs-Bremsdrucks aussteuert. Die zweite elektronische Steuereinheit übernimmt also im Redundanzfall vorzugsweise das Bereitstellen von Schaltsignalen, um wenigstens den Vorderachs-Bremsdruck oder den Hinterachs-Bremsdruck auszusteuern. Das Aussteuern dieser Drücke erfolgt aber vorzugsweise nicht durch die elektronische Steuereinheit selbst, sondern entweder durch die erste elektropneumatische Steuereinrichtung oder die zweite elektropneumatische Steuereinrichtung. Es kann auch vorgesehen sein, dass abhängig von dem jeweiligen Fehler, der im Zentralmodul oder einer übergeordneten Einheit für autonomes Fahren vorliegt, entweder die erste elektropneumatische Steuereinrichtung oder die zweite elektropneumatische Steuereinrichtung von der zweiten Steuereinheit angesteuert wird.

Die zweite elektronische Steuereinheit kann beispielsweise die Steuereinheit eines elektropneumatischen Parkbremsmoduls sein. Der redundante Hinterachs-Bremsdruck wird in diesem Fall vorzugsweise direkt von dem elektropneumatischen Parkbremsmodul ausgesteuert. Er wird vorzugsweise auch von dem elektropneumatischen Parkbremsmodul erzeugt. Dies ist eine besonders einfache Ausgestaltung, da das elektropneumatische Parkbremsmodul ohnehin mit der Hinterachse verbunden ist, um im geparkten Zustand des Fahrzeugs Parkbremsen einzulegen. Dieses Parkbremsmodul kann daher vorteilhaft genutzt werden, um auch im Redundanzfall den redundanten Hinterachs-Bremsdruck auszusteuern.

Weiterhin ist bevorzugt, dass in einer Variante die zweite elektropneumatische Steuereinrichtung wenigsten einen redundanten Steuerdruck an der ersten elektropneumatischen Steuereinrichtung zum Aussteuern des redundanten Vorderachs-Bremsdrucks bereitstellt. Beispielsweise ist auch hierbei die zweite elektropneumatische Steuereinrichtung die Steuereinrichtung eines elektropneumatischen Parkbremsmoduls. Der redundante Steuerdruck kann beispielsweise der an der Hinterachse ausgesteuerte redundante Hinterachs-Bremsdruck sein, der als redundanter Steuerdruck für die Vorderachse an der ersten elektropneumatischen Steuereinrichtung bereitgestellt wird. Diese nutzt dann den als redundanten Steuerdruck bereitgestellten redundanten Hinterachs-Bremsdruck, um basierend auf diesem, den redundanten Vorderachs-Bremsdruck auszusteuern. Dies geschieht in dieser Ausführungsform erfindungsgemäß unter Verwendung der Bremskraftverteilung, die gespeichert ist.

In einem zweiten Aspekt der Erfindung wird die eingangs genannte Aufgabe gelöst durch ein elektronisch steuerbares pneumatisches Bremssystem für ein Fahrzeug, insbesondere Nutzfahrzeug, welches insbesondere zur Ausführung des Verfahrens nach einer der vorstehend beschriebenen bevorzugten Ausführungsformen des Verfahrens gemäß dem ersten Aspekt der Erfindung ausgebildet ist. Das Bremssystem weist wenigstens auf: eine erste elektronische Steuereinheit zum Empfangen eines Bremsanforderungs-Signals zum automatisierten elektronischen Ansteuern von Bremsen in dem Fahrzeug, wobei das Bremsanforderungs-Signal von den Bremsen umzusetzende Anforderungen zum Bewirken einer automatisiert angeforderten Fahrzeug-Soll-Längsdynamik übertragen werden, wobei die erste elektronische Steuereinheit dazu ausgebildet ist eine Bremsdruckverteilung zu ermitteln und wenigstens ein erstes Bremsdrucksignal unter Berücksichtigung des Bremsanforderungs-Signals und der Bremsdruckverteilung bereitzustellen. Wenigstens eine erste elektropneumatische Steuereinrichtung, die mit der ersten elektronischen Steuereinheit zum Empfangen des ersten Bremsdrucksignals verbunden ist, wobei die erste elektropneumatische Steuereinrichtung zum Aussteuern wenigstens des Vorderachs-Bremsdrucks und/oder des Hinterachs-Bremsdrucks ausgebildet ist. Eine zweite elektronische Steuereinheit, die mit der ersten elektronischen Steuereinheit zum Empfangen der Bremsdruckverteilung und Speichern der erfassten Bremsdruckverteilung verbunden ist. Dabei ist die zweite elektronische Steuereinheit dazu ausgebildet, für den Fall, dass das Bremsanforderungs-Signal nicht oder nicht richtig verarbeitet oder eingelesen werden kann, das Folgende zu tun: das Bremsanforderungs-Signal oder ein redundantes Bremsanforderungs-Signals empfangen, und in Antwort auf den Empfang des Bremsanforderungs-Signals oder eines redundanten Bremsanforderungs-Signals eine Aussteuerung eines redundanten Vorderachs-Bremsdrucks und eines redundanten Hinterachs-Bremsdrucks unter Berücksichtigung der gespeicherten Bremsdruckverteilung zu veranlassen.

Es soll verstanden werden, dass das Verfahren gemäß dem ersten Aspekt der Erfindung und das System gemäß dem zweiten Aspekt der Erfindung gleiche oder ähnliche Unteraspekte aufweisen, wie sie insbesondere in den abhängigen Ansprüchen niedergelegt sind. Insofern wird für die bevorzugten Ausführungsformen und Vorteile auf die obige Beschreibung zum ersten Aspekt der Erfindung vollumfänglich Bezug genommen.

Insofern ist vorzugsweise vorgesehen, dass die zweite elektronische Steuereinheit dazu eingerichtet ist, die Bremsdruckverteilung kontinuierlich zu erfassen und zu speichern. Zu diesem Zweck kann die zweite elektronische Steuereinheit einen eigenen Speicher aufweisen. Sie kann auch mit einem externen Speicher verbunden sein, um die erfasste Bremsdruckverteilung auf dem externen Speicher zu speichern. Der Begriff kontinuierlich soll sowohl kontinuierliche aus auch quasi-kontinuierliche Erfassung und/oder Speicherung umfassen.

Weiterhin ist bevorzugt, dass die zweite elektronische Steuereinheit dazu eingerichtet ist, ein Bremsdruckniveau zu erfassen und als gespeichertes Bremsdruckniveau zu speichern. Ferner ist die zweite elektronische Steuereinheit vorzugsweise dazu eingerichtet, für den Fall, dass das Bremsanforderungs-Signal nicht oder nicht richtig verarbeitet oder eingelesen werden kann, den redundanten Vorderachs-Bremsdruck und den redundanten Hinterachs-Bremsdruck unter Berücksichtigung des gespeicherten Bremsdruckniveaus auszusteuern. Das heißt, die zweite elektronische Steuereinheit empfängt das Bremsanforderungs-Signal oder das redundante Bremsanforderungs-Signal und setzt dieses unter Verwendung des gespeicherten Bremsdruckniveaus um.

Auch das Bremsdruckniveau wird vorzugsweise kontinuierlich erfasst und gespeichert, wobei dies wiederum auch ein quasi-kontinuierliches Erfassen und Speichern umfasst.

In einer bevorzugten Weiterbildung ist die zweite elektronische Steuereinheit dazu eingerichtet, eine Antriebsausgangsdrehzahl zu empfangen. Diese Antriebsausgangsdrehzahl ist vorzugsweise die Ausgangsdrehzahl eines Getriebes des Fahrzeugs. Ferner ist elektronische Steuereinheit vorzugsweise dazu eingerichtet, einen Schlupf der angetriebenen Achse, basierend auf der empfangenen Antriebsausgangsdrehzahl zu ermitteln. Bei Nutzfahrzeugen ist die angetriebene Achse in der Regel die Hinterachse.

Ferner ist bevorzugt, dass die zweite elektronische Steuereinheit dazu eingerichtet ist, die gespeicherte Bremsdruckverteilung erst dann durch eine erfasste Bremsdruckverteilung in die Speicher zu überschreiben, wenn ein gültige Bremsanforderungssignal eingelesen und richtig verarbeitet werden kann. Dies gilt sowohl beim Starten des Fahrzeugs als auch nach einer vorangegangenen Phase des Redundanzbetriebs.

Für den Fall dass ein redundantes Bremsanforderungs-Signal verwendet werden soll, weist das elektronisch steuerbare pneumatische Bremssystem vorzugsweise einen Parkbremsschalter und/oder eine weitere elektronische Steuereinheit auf, die dazu eingerichtet ist, das redundante Bremsanforderungs-Signals bereitzustellen. Je nach Ausführungsform kann das elektronisch steuerbare pneumatische Bremssystem auch alle drei Varianten aufweisen.

Bevorzugt ist die erste elektronische Steuereinheit mit dem Fahrzeugbus verbunden und empfängt das Bremsanforderungs-Signal über den Fahrzeugbus oder eine andere Schnittstelle. In dem Bremsanforderungs-Signal kann bereits die Bremsdruckverteilung mit übergeben werden, oder diese wird separat übergeben und von der ersten elektronischen Steuereinheit über den Fahrzeugbus oder eine andere Schnittstelle empfangen. Sie kann ebenso basierend auf über den Fahrzeugbus oder eine andere Schnittstelle empfangenen Daten und/oder internen Daten der ersten elektronischen Steuereinheit ermittelt werden und anschließend über den Fahrzeugbus bereitgestellt werden. Die über den Fahrzeugbus erhaltenen Daten können insbesondere die Achslast des Fahrzeugs sein. Basierend hierauf kann die erste elektronische Steuereinheit die Bremsdruckverteilung ermitteln.

In übereinstimmender Weise ist vorzugsweise die zweite elektronische Steuereinheit mit dem Fahrzeugbus verbunden und empfängt die Bremsdruckverteilung über den Fahrzeugbus oder einen separaten Bus. Alternativ kann die zweite elektronische Steuereinheit auch auf andere Weise und insbesondere direkt mit der ersten elektronischen Steuereinheit verbunden sein.

In einer weiteren bevorzugten Ausgestaltung ist die zweite elektronische Steuereinheit dazu ausgebildet, basierend auf dem empfangenen redundanten Bremsanforderungs-Signal oder dem Bremsanforderungs-Signal, an wenigstens einer zweiten elektropneumatischen Steuereinrichtung und/oder der ersten elektropneumatischen Steuereinrichtung, Schaltsignale bereitzustellen, derart, dass die zweite elektropneumatische Steuereinrichtung und/oder die erste elektropneumatische Steuereinrichtung wenigstens einen des redundanten Vorderachs-Bremsdrucks oder des redundanten Hinterachs-Bremsdrucks aussteuert. Dazu kann die zweite elektronische Steuereinheit mit der ersten oder zweiten elektropneumatischen Steuereinrichtung verbunden oder in diese integriert sein. Neben den gennannten Funktionen kann die zweite elektronische Steuereinheit auch andere Funktionen übernehmen, insbesondere auch im regulären Betrieb die erste und/oder zweite elektropneumatische Steuereinrichtung steuern.

In einer beispielweisen bevorzugten Ausführungsform ist die zweite elektronische Steuereinheit die Steuereinheit eines elektropneumatischen Parkbremsmoduls, welches dazu ausgebildet ist, den redundanten Hinterachs-Bremsdruck direkt auszusteuern. Das heißt, die zweite elektronische Steuereinheit hat in dieser Ausführungsform eine Doppelfunktion, indem sie auch im regulären Betrieb das elektropneumatische Parkbremsmodul steuert.

In einer weiteren bevorzugten Variante ist die zweite elektropneumatische Steuereinrichtung dazu eingerichtet, einen redundanten Steuerdruck an der ersten elektropneumatischen Steuereinrichtung zum Aussteuern des redundanten Vorderachs-Bremsdrucks bereitzustellen.

In einem dritten Aspekt der Erfindung wird die eingangs genannte Aufgabe durch ein Fahrzeug gelöst, insbesondere Nutzfahrzeug, mit einem elektronisch gesteuerten pneumatischen Bremssystem nach einer der vorstehend beschriebenen bevorzugten Ausführungsformen eines elektronisch gesteuerten pneumatischen Bremssystems gemäß dem zweiten Aspekt der Erfindung, welches insbesondere geeignet ist zur Durchführung eines Verfahrens gemäß einer der vorstehend beschriebenen Ausführungsformen eines Verfahrens gemäß dem ersten Aspekt der Erfindung.

Es soll verstanden werden, dass das Verfahren gemäß dem ersten Aspekt der Erfindung, das Bremssystem gemäß dem zweiten Aspekt der Erfindung und das Fahrzeug gemäß dem dritten Aspekt der Erfindung gleiche und ähnliche Unteraspekte haben, wie sie insbesondere in den abhängigen Ansprüchen niedergelegt sind. Insofern wird für die bevorzugten Ausführungsformen sowie deren Vorteile, mit Bezug auf das Fahrzeug, auf die obigen Beschreibungen zu dem Verfahren gemäß dem ersten Aspekt der Erfindung und dem Bremssystem gemäß dem zweiten Aspekt der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein erfindungsgemäßes Bremssystem gemäß einer ersten Ausführungsform als Blockschaltbild; und
- Fig. 2: ein erfindungsgemäßes Bremssystem einer zweiten Ausführungsform als Blockschaltbild.

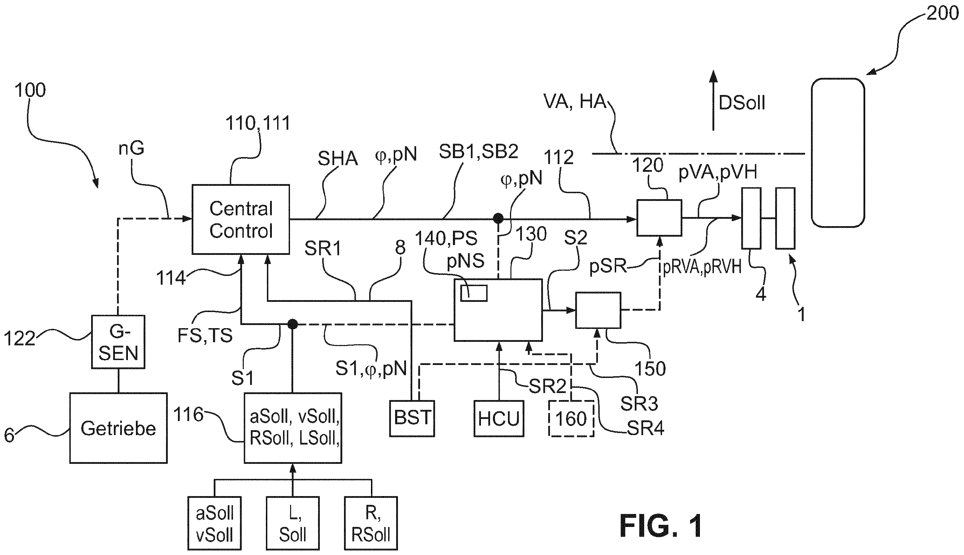

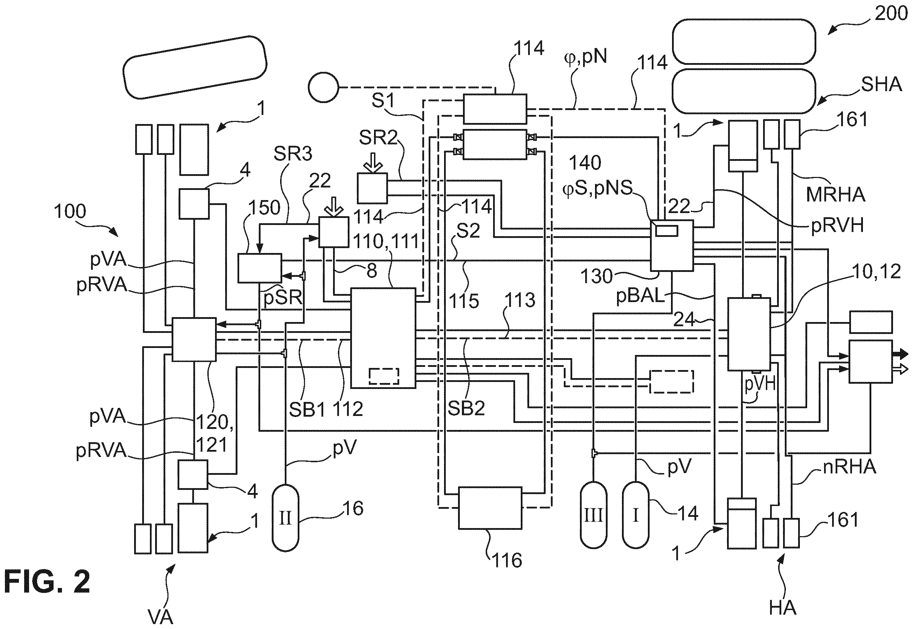

In der Ausführungsform gemäß Fig. 1 ist ein Ausschnitt aus einem Bremssystem 100 eines Fahrzeugs 200 als Blockschaltbild dargestellt. Demnach weist das Bremssystem 100 eine erste elektronische Steuereinheit 110 und eine erste elektropneumatische Steuereinrichtung 120 auf. Die erste elektronische Steuereinheit 110 ist in diesem Ausführungsbeispiel als sogenanntes Zentralmodul 111 ausgebildet und mit der ersten elektropneumatischen Steuereinrichtung 120 über einen ersten Bus 112 verbunden. Die erste elektronische Steuereinheit 110 stellt über den ersten Bus 112 wenigstens ein erstes Bremsdrucksignal SB1, vorzugsweise aber auch ein zweites Bremsdrucksignal SB2, an der ersten elektropneumatischen Steuereinrichtung 120 bereit. Die erste elektropneumatische Steuereinrichtung 120 weist vorzugsweise eine elektronische Steuereinheit (nicht gezeigt) sowie ein oder mehrere Ventile auf (nicht gezeigt), die dazu dienen, das erste Bremsdrucksignal SB1, und vorzugsweise das zweite Bremsdrucksignal SB2, in einen wenigstens Vorderachs-Bremsdruck pVA und/oder Hinterachs-Bremsdruck pVH umzusetzen. Zu diesem Zweck ist die erste elektropneumatische Steuereinrichtung 120 vorzugsweise mit einem Druckluftvorrat verbunden (vgl. Fig. 2). In dem in Fig. 1 dargestellten Ausführungsbeispiel stellt die erste elektropneumatische Steuereinrichtung 120 den Vorderachs-Bremsdruck pVA bzw. Hinterachs-Bremsdruck pVH an einer Radbremse 1 bereit, der in diesem Ausführungsbeispiel ein ABS-Bremsventil 4 vorgeschaltet ist.

Die erste elektronische Steuereinheit 110, in diesem Ausführungsbeispiel das Zentralmodul 111, ist über einen Fahrzeugbus 114 mit einer Einheit für autonomes Fahren 116 verbunden. Diese Einheit für autonomes Fahren 116 gibt gemäß Fig. 1 eine Sollbeschleunigung aSoll, Sollgeschwindigkeit vSoll, eine Fahrzeug-Soll-Richtung RSoll und einen Fahrzeug-Soll-Lenkwinkel LSoll vor. Gemeinsam bilden diese Werte die Fahrzeuglängsdynamik DSoll.

Über den Fahrzeugbus 114 stellt die Einheit für autonomes Fahren 116 an der ersten elektronischen Steuereinheit 110 ein Bremsanforderungs-Signal S1 bereit. Optional ist die erste elektronische Steuereinheit 110 auch mit einem Drehzahlsensor 122 verbunden, der die Ausgangsdrehzahl nG eines Getriebes 6 erfasst und entsprechend an der ersten elektronischen Steuereinheit 110 bereitstellt. Basierend auf der Ausgangsdrehzahl nG und der Raddrehzahl nRHA, die über Raddrehzahlsensoren 161 an der Hinterachse HA erfasst wird, kann der Schlupf SHA an der Hinterachse HA, die hier die angetriebene Achse ist, ermittelt werden. Auch der Schlupf SHA kann separat bspw. über den ersten Bus 112 bereitgestellt werden.

In dem in Fig. 1 gezeigten Ausführungsbeispiel bestimmt die erste elektronische Steuereinheit 110 aus dem Bremsanforderungs-Signal S1 eine Bremsdruckverteilung ϕ. Die Bremsdruckverteilung ϕ gibt an, wie der Bremsdruck zwischen der Vorderachse VA und der Hinterachse HA aufzuteilen ist, um ein stabiles Bremsen des Fahrzeugs 200 zu ermöglichen. Die Bremsdruckverteilung ϕ wird von der ersten elektronischen Steuereinheit 110 über den ersten Bus 112 bereitgestellt.

Weiterhin umfasst das elektronisch steuerbare pneumatische Bremssystem 100 ein manuell betätigbares Bremspedal BST. Das manuell betätigbare Bremspedal BST ist über eine Bremspedalleitung 8 mit der ersten elektronischen Steuereinheit 110 verbunden und stellt an dieser ein erstes redundantes Bremssignal SR1 bereit. Dieses erste redundante Bremsanforderungs-Signal dient beispielsweise dazu, wenn die Einheit für autonomes Fahren 116 ausfällt, von der ersten elektronischen Steuereinheit 110 umgesetzt zu werden, um elektronisch den Vorderachs-Bremsdruck pVA und Hinterachs-Bremsdruck pVH als redundanten Vorderachs-Bremsdruck pRVA und redundanten Hinterachs-Bremsdruck pRVH auszusteuern.

Das elektronisch steuerbare pneumatische Bremssystem 100 weist ferner eine zweite elektronische Steuereinheit 130 auf, die mit der ersten elektronischen Steuereinheit 110 zum Empfang der Bremsdruckverteilung ϕ und Speichern der erfassten Bremsdruckverteilung ϕ als gespeicherte Bremsdruckverteilung ϕS verbunden ist. Zu diesem Zweck ist die zweite elektronische Steuereinheit 130 mit dem Fahrzeugbus 114 verbunden und empfängt über diesen das erste Bremsanforderungs-Signal S1, und somit auch die Bremsdruckverteilung ϕ und vorzugsweise auch ein Bremsdruckniveau pN. Die zweite elektronische Steuereinheit 130 weist einen Speicher 140 auf, in dem die zweite elektronische Steuereinheit 130 die empfangene Bremsdruckverteilung ϕ als gespeicherte Bremsdruckverteilung ϕS speichert und das empfangene Bremsdruckniveau pN als gespeichertes Bremsdruckniveau pNS speichert. Dies erfolgt vorzugsweise kontinuierlich, bzw. quasi-kontinuierlich. Dabei wird vorzugsweise der jeweils zuvor gespeicherte Wert durch den aktuelleren Wert überschrieben.

Alternativ oder zusätzlich kann die zweite elektronische Steuereinheit 130 auch mit dem ersten Bus 112 verbunden sein, über den von der ersten elektronischen Steuereinheit 110 ebenfalls die Bremsdruckverteilung ϕ und das Bremsdruckniveau pN an die erste elektropneumatische Steuereinrichtung 120 bereitgestellt werden kann.

Die zweite elektronische Steuereinheit 130 ist dazu eingerichtet, basierend auf der gespeicherte Bremsdruckverteilung ϕS und dem gespeicherten Bremsdruckniveau pNS Schaltsignale S2 an einer zweiten elektropneumatischen Steuereinrichtung 150 bereitzustellen. Die zweite elektropneumatische Steuereinrichtung 150 weist vorzugsweise ein oder mehrere Ventile (nicht gezeigt) auf, die dazu eingerichtet sind, basierend auf den empfangenen Schaltsignalen S2 zuschalten und entsprechende Drücke auszusteuern. Im vorliegenden Ausführungsbeispiel (Fig. 5) ist die zweite elektropneumatische Steuereinrichtung 150 dazu eingerichtet, basierend auf dem Empfang der Schaltsignale S2 von der zweiten elektronischen Steuereinheit 130, einen redundanten Steuerdruck pSR auszusteuern, und zwar in diesem Ausführungsbeispiel an der ersten elektropneumatischen Steuereinrichtung 120. Die erste elektropneumatische Steuereinrichtung 120 ist in diesem Ausführungsbeispiel vorzugsweise dazu eingerichtet, basierend auf dem Empfang des redundanten Steuerdrucks pSR, wenigstens entweder einen redundanten Vorderachs-Bremsdruck pRVA oder einen redundanten Hinterachs-Bremsdruck pRVH auszusteuern.

Tritt nun ein Fehler auf, und kann das Bremsanforderungs-Signal S1 nicht oder nicht richtig verarbeitet oder eingelesen werden, beispielsweise, weil die erste elektronische Steuereinheit 110 einen Fehler hat, und/oder die Einheit für autonomes Fahren 116 einen Fehler hat, wird vorzugsweise ein Timeout-Signal TS über den Fahrzeugbus 114 bereitgestellt. Der Redundanzfall tritt ein und die zweite elektronische Steuereinheit 130 kann die Steuerung des Bremssystems 100 übernehmen. Alternativ oder zusätzlich zum Timeoutsignal TS kann auch ein Fehlerzustandssignal FS eingelesen werden, dass einen Fehlerzustand von Betriebsbremsen 1 angibt.

Für den Fall, dass die erste elektronische Steuereinheit 110 ausgefallen ist, kann die zweite elektronische Steuereinheit 130 das Bremsanforderungs-Signal S1 verarbeiten, wenn diese, wie in Fig. 1 gezeigt, mit dem Fahrzeugbus 114 verbunden ist.

Wird aber kein Bremsanforderungs-Signal S1 bereitgestellt, beispielsweise, weil die Einheit für autonomes Fahren 116 ausgefallen ist, kann die zweite elektronische Steuereinheit 130 ein redundantes Bremsanforderungs-Signal, wie beispielsweise das erste redundante Bremsanforderungs-Signal SR1, das vorzugsweise von der ersten Steuereinheit 110 über den ersten Bus 112 bereitgestellt wird, oder auch ein zweites redundantes Bremsanforderungs-Signal SR2, das beispielsweise von einem Handbremsschalter HCU bereitgestellt wird, verarbeiten. Derartige redundante Bremsanforderungs-Signale, insbesondere, wenn es vom Handbremsschalter HCU stammt, umfassen in der Regel keine Informationen über eine Bremsdruckverteilung oder ein Bremsdruckniveau. Die zweite elektronische Steuereinheit 130 ist in dem gezeigten Ausführungsbeispiel (Fig. 1) dazu ausgebildet, das zweite redundante Bremsanforderungs-Signal SR2 zu verarbeiten, unter Berücksichtigung der gespeicherten Bremsdruckverteilung ϕS und des gespeicherten Bremsdruckniveaus pNS und basierend hierauf entsprechende Schaltsignale S2 an der zweiten elektropneumatischen Steuereinrichtung 150 bereitzustellen. Diese steuert basierend hierauf wenigstens einen ersten redundanten Steuerdruck pSR aus, und die erste elektropneumatische Steuereinrichtung 120 basierend hierauf den redundanten Vorderachs-Bremsdruck pRVA und/oder den redundanten Hinterachs-Bremsdruck pRVH.

Die Kernidee des vorliegenden Ausführungsbeispiels ist also das Erfassen von Bremskenngrößen, nämlich der Bremsdruckverteilung ϕ und des Bremsdruckniveaus PN des Betriebsbremssystems über ein zweites Steuergerät, in diesem Fall die zweite elektronische Steuereinheit 130. Bei Ausfall des Betriebsbremssystems wird die redundante Bremsdruckaussteuerung über die zweite elektronische Steuereinheit 130 realisiert.

In Varianten des ersten Ausführungsbeispiels (Fig. 1) kann auch vorgesehen sein, dass der redundante Vorderachs-Bremsdruck pRVA und/oder der redundante Hinterachs-Bremsdruck pRVH direkt von der zweiten elektropneumatischen Steuereinrichtung 150 an wenigstens einer Radbremse 1 ausgesteuert wird. Die indirekte Aussteuerung mit Zwischenschaltung der ersten elektropneumatischen Steuereinrichtung 120 ist nicht zwingend erforderlich.

Fig. 2 zeigt nun ein zweites Ausführungsbeispiel, wobei gleiche und ähnliche Elemente mit gleichen Bezugszeichen versehen sind, sodass vollumfänglich auf die obige Beschreibung zum ersten Ausführungsbeispiel Bezug genommen wird. Im zweiten Ausführungsbeispiel (Fig. 2) ist ein vollständiges Bremssystem 100 eines Fahrzeugs 200, insbesondere eines Nutzfahrzeugs 200, gezeigt. Die erste elektronische Steuereinheit 110 ist wiederum durch ein Zentralmodul 111 gebildet, welches über den Fahrzeugbus 114 mit der Einheit für autonomes Fahren 116 verbunden ist. Über den Fahrzeugbus 114 empfängt das Zentralmodul 111 das Bremsanforderungs-Signal S1.

Das Zentralmodul 111 ist weiterhin über einen ersten Bus 112 mit der ersten elektropneumatischen Steuereinrichtung 120 verbunden, die in diesem Ausführungsbeispiel (Fig. 2) als Vorderachsmodulator 121 ausgebildet ist. Der Vorderachsmodulator 121 ist dazu eingerichtet, den Vorderachs-Bremsdruck pVA an den Radbremsen 1 der Vorderachse VA bereitzustellen. Dazu empfängt der Vorderachsmodulator 121 von dem Zentralmodul 111 ein erstes Bremssignal SB1 über den ersten Bus 112. Der Vorderachsmodulator 121 mit einem zweiten Druckluftvorrat 16 verbunden, der einen Vorratsdruck pV an dem Vorderachsmodulator 121 bereitstellt.

Das Zentralmodul 111 ist weiterhin über einen zweiten Bus 113 mit einer weiteren elektropneumatischen Steuereinrichtung 10 verbunden, die in diesem Ausführungsbeispiel als Hinterachsmodulator 12 ausgebildet ist. Das Zentralmodul 111 stellt an dem Hinterachsmodulator 12 ein zweites Bremssignal SB2 über den zweiten Bus 113 bereit. Der Hinterachsmodulator 12 ist dazu ausgebildet, basierend auf dem empfangenen zweiten Bremssignal SB2, einen entsprechenden Hinterachs-Bremsdruck pVH an entsprechenden Radbremsen 1 der Hinterachse HA auszusteuern. Dazu ist der Hinterachsmodulator 12 ferner mit einem ersten Druckluftvorrat 14 verbunden, der den Vorratsdruck pV an dem Hinterachsmodulator 12 bereitstellt.

Weiterhin ist das Zentralmodul 111 mit einem Bremspedal BST verbunden, das über eine erste pneumatische Leitung 20 mit dem zweiten Druckluftvorrat 16 verbunden ist. Durch Betätigung des Bremspedals BST kann sowohl ein elektronisches redundantes Bremsanforderungs-Signal SR1 über die Bremspedalleitung 8 an dem Zentralmodul 111 bereitgestellt werden als auch ein pneumatisches redundantes Bremsanforderungs-Signal SR3 über eine zweite pneumatische Leitung 22 an einer zweiten elektropneumatischen Steuereinrichtung 150. Diese ist dazu ausgebildet, basierend auf dem empfangenen pneumatischen dritten redundanten Bremsanforderungs-Signal SR3, wenigstens einen pneumatischen Steuerdruck pSR auszusteuern und diesen an der ersten elektropneumatischen Steuereinrichtung 120, nämlich dem Vorderachsmodulator 121 bereitzustellen. Der Vorderachsmodulator 121 steuert dann, basierend auf dem empfangenen pneumatischen Steuerdruck pSR, den redundanten Vorderachs-Bremsdruck pRVA an den Radbremsen 1 der Vorderachse VA aus.

Die zweite elektronische Steuereinheit 130 ist in diesem zweiten Ausführungsbeispiel (Fig. 2) mit einem elektropneumatischen Feststellbremsmodul EPH integriert. Das heißt, die zweite elektronische Steuereinheit 130 ist die elektronische Steuereinheit des Feststellbremsmoduls EPH. Das Feststellbremsmodul EPH ist ebenfalls über den Fahrzeugbus 114 mit der Einheit für autonomes Fahren 116 verbunden, und empfängt über den Fahrzeugbus 114 das Bremsanforderungs-Signal S1 sowie in diesem oder separat die Bremsdruckverteilung ϕ und das Bremsdruckniveau pN. In dem Feststellbremsmodul EPH ist ein Speicher 114 vorgesehen, in dem die zweite elektronische Steuereinheit 130 die empfangene Bremsdruckverteilung ϕ und das empfangene Bremsdruckniveau pN als gespeicherte Bremsdruckverteilung ϕS und gespeichertes Bremsdruckniveau pNS abspeichert. Das Feststellbremsmodul EPH ist über einen dritten Bus 115 direkt mit der zweiten elektropneumatischen Steuereinrichtung 150 verbunden.

Für den Fall, dass das Bremsanforderungs-Signal S1 nicht oder nicht richtig durch die Einheit für autonomes Fahren 116 bereitgestellt oder verarbeitet, oder durch das Zentralmodul 111 verarbeitet oder empfangen werden kann, ist es gemäß dieser Ausführungsform möglich, dass das Feststellbremsmodul EPH das Bremsanforderungs-Signal S1 über den Fahrzeugbus 114 empfängt und ein entsprechendes Schaltsignal S2 über den dritten Bus 115 an der zweiten elektropneumatischen Steuereinrichtung 150 bereitstellt, die basierend hierauf den redundanten Steuerdruck pSR aussteuert und am Vorderachsmodulator 112 bereitstellt. Der Vorderachsmodulator 112 kann dann basierend auf dem redundanten Steuerdruck pSR den redundanten Vorderachs-Bremsdruck pRVA aussteuern. Das erste Bremssignal SB1, das der Vorderachsmodulator 121 im regulären Betrieb von dem Zentralmodul 111 empfängt, ist in diesem Redundanzfall nicht erforderlich.

Die Schaltsignale S2 werden von dem Feststellbremsmodul EPH, insbesondere in diesem von der zweiten elektronischen Steuereinheit 130 unter Berücksichtigung der gespeicherten Bremsdruckverteilung ϕS und des gespeicherten Bremsdruckniveaus pNS bereitgestellt. Das Feststellbremsmodul EPH ist ferner direkt über erste und zweite Feststellbremsdruckleitungen 22, 24 mit den Radbremsen 1 der Hinterachse HA verbunden, sodass das Feststellbremsmodul EPH in dieser Ausführungsform (Fig. 2) den redundanten Hinterachs-Bremsdruck pRVH direkt aussteuern kann. Auch dieser wird unter Berücksichtigung der gespeicherten Bremsdruckverteilung ϕS und gespeicherten Bremsdruckniveaus pNS ausgesteuert. Auf diese Weise lässt sich eine achsengerechte Bremsdruckaussteuerung vornehmen, sodass ein Blockieren weitgehend verhindert werden kann.

### Bezugszeichenliste (Bestandteil der Beschreibung)

- aSoll: Fahrzeug-Soll-Beschleunigung
- BST: Bremspedal
- DSoll: Fahrzeug-Soll-Dynamik
- HA: Hinterachse
- LSoll: Fahrzeug-Soll-Lenkwinkel
- nG: Ausgangsdrehzahl
- pN: Bremsdruckniveau
- pNS: Gespeichertes Bremsdruckniveau
- pSR: redundanter Steuerdruck
- RSoll: Fahrzeug-Soll-Richtung
- S2: Schaltsignale
- SHA: Schlupf an der Hinterachse
- SB1: erstes Bremsdrucksignal
- SB2: zweites Bremsdrucksignal
- SR1: erstes redundantes Bremsanforderungs-Signal
- SR2: zweites redundantes Bremsanforderungs-Signal
- SR3: drittes redundantes Bremsanforderungs-Signal
- SR4: viertes redundantes Bremsanforderungs-Signal
- FS: Fehlerzustandssignal
- TS: Timeout-Signal
- VA: Vorderachse
- vSoll: Fahrzeug-Soll-Geschwindigkeit
- ϕ: Bremsdruckverteilung
- ϕS: Gespeicherte Bremsdruckverteilung
- 1: Radbremse
- 4: ABS-Bremsventil
- 6: Getriebe
- 8: Bremspedalleitung
- 10: weitere elektropneumatische Steuereinrichtung
- 12: Hinterachsmodulator
- 14: erster Druckluftvorrat
- 16: zweiter Druckluftvorrat
- 20: Erste pneumatische Leitung
- 22: erste Feststellbremsdruckleitung
- 24: zweite Feststellbremsdruckleitung
- 100: elektronisch steuerbares pneumatisches Bremssystem
- 110: erste elektronische Steuereinheit
- 111: Zentralmodul
- 112: erster BUS
- 113: zweiter BUS
- 114: Fahrzeugbus
- 115: dritter BUS
- 116: Einheit für autonomes Fahren
- 120: erste elektropneumatische Steuereinrichtung
- 121: Vorderachsmodulator
- 122: Drehzahlsensor
- 130: zweite elektronische Steuereinheit
- 140: Speicher
- 150: zweite elektropneumatische Steuereinrichtung
- 160: weitere elektronische Steuereinheit
- 161: Raddrehzahlsensoren
- 200: Fahrzeug, Nutzfahrzeug

## Patentansprüche

1. Verfahren zum automatisierten elektronischen Steuern eines Bremssystems (100) in einem Fahrzeug (200), insbesondere Nutzfahrzeug (200), mit mindestens den Schritten:
- Einlesen eines Bremsanforderungs-Signals (S1) zum automatisierten elektronischen Ansteuern von Bremsen (1) in dem Fahrzeug (200), wobei über das Bremsanforderungs-Signal (S1) von den Bremsen (1) umzusetzende Anforderungen (aSoll, vSoll) zum Bewirken einer automatisiert angeforderten Fahrzeug-Soll-Längsdynamik (DSoll) übertragen werden;
- Ermitteln einer Bremsdruckverteilung (ϕ), die ein Verhältnis eines Vorderachs-Bremsdrucks (pVA) einer Vorderachse (VA) und eines Hinterachs-Bremsdrucks (pVH) einer Hinterachse (HA) angibt;
- Bereitstellen wenigstens eines ersten Bremsdrucksignals (SB1, SB2) von einer ersten elektronischen Steuereinheit (110) an wenigstens einer ersten elektropneumatischen Steuereinrichtung (120) unter Berücksichtigung des Bremsanforderungs-Signals (S1) und der Bremsdruckverteilung (ϕ) zum Aussteuern wenigstens des Vorderachs-Bremsdrucks (pVA) und des Hinterachs-Bremsdrucks (pVH);
- Empfangen der Bremsdruckverteilung (ϕ) an einer zweiten elektronischen Steuereinheit (130) und Speichern der erfassten Bremsdruckverteilung (ϕS); und für den Fall, dass das Bremsanforderungs-Signal (S1) nicht oder nicht richtig verarbeitet oder eingelesen werden kann:
- Empfangen des Bremsanforderungs-Signals (S1) oder eines redundanten Bremsanforderungs-Signals (SR) an der zweiten elektronischen Steuereinheit (130), und
- in Antwort auf den Empfang des Bremsanforderungs-Signals (S1) oder des redundanten Bremsanforderungs-Signals (SR) an der zweiten elektronischen Steuereinheit (130), Aussteuern eines redundanten Vorderachs-Bremsdrucks (pRVA) und eines redundanten Hinterachs-Bremsdrucks (pRVH) unter Berücksichtigung der gespeicherten Bremsdruckverteilung (ϕS).

2. Verfahren nach Anspruch 1, wobei die Bremsdruckverteilung (ϕ) an der zweiten Steuereinheit (130) kontinuierlich erfasst und gespeichert wird.

3. Verfahren nach Anspruch 1 oder 2, umfassend die Schritte:
- Empfangen eines Bremsdruckniveaus (pN) an der zweiten elektronischen Steuereinheit (130) und Speichern des erfassten Bremsdruckniveaus (pNS); und für den Fall, dass das Bremsanforderungs-Signal (S1) nicht oder nicht richtig verarbeitet oder eingelesen werden kann:
- Aussteuern des redundanten Vorderachs-Bremsdrucks (pRVA) und des redundanten Hinterachs-Bremsdrucks (pRVH) unter Berücksichtigung des gespeicherten Bremsdruckniveaus (pNS).

4. Verfahren nach Anspruch 3, wobei das Bremsdruckniveau (pN) an der zweiten Steuereinheit (130) kontinuierlich erfasst und gespeichert wird.

5. Verfahren nach einem der vorstehenden Ansprüche, wobei für den Fall, dass das Bremsanforderungs-Signal (S1) nicht oder nicht richtig verarbeitet oder eingelesen werden kann, ein Timeoutsignal (TS) und/oder ein übermitteltes Fehlerzustandssignal (FS) an der zweiten elektronischen Steuereinheit (130) erfasst wird.

6. Verfahren nach einem der vorstehenden Ansprüche, umfassend:
- Empfangen einer Antriebsausgangsdrehzahl (nG) an der zweiten elektronischen Steuereinheit (130); und
- Ermitteln eines Schlupfes (SHA) der angetriebenen Achse (HA) basierend auf der empfangenen Antriebsausgangsdrehzahl (nG).

7. Verfahren nach einem der vorstehenden Ansprüche, wobei die gespeicherte Bremsdruckverteilung (ϕS) erst dann durch eine erfasste Bremsdruckverteilung (ϕ) in dem Speicher (140) überschrieben wird, wenn wieder ein gültiges Bremsanforderungs-Signal (S1) eingelesen und richtig verarbeitet wird.

8. Verfahren nach einem der vorstehenden Ansprüche, wobei das redundante Bremsanforderungs-Signal (SR) von einem Parkbremsschalter (HCU), einem Bremspedal (BST) oder einer weiteren elektronischen Steuereinheit (160) bereitgestellt wird.

9. Verfahren nach einem der vorstehenden Ansprüche, wobei das Einlesen des Bremsanforderungs-Signals (S1) von der ersten elektronischen Steuereinheit (110) ausgeführt wird, und wobei die erste elektronische Steuereinheit (110) die Bremsdruckverteilung (ϕ) empfängt oder basierend auf empfangenen Daten und/oder internen Daten ermittelt und die ermittelte Bremsdruckverteilung (ϕ) bereitstellt.

10. Verfahren nach einem der vorstehenden Ansprüche, wobei die zweite elektronische Steuereinheit (130) mit einem separaten Bus (115) oder dem Fahrzeugbus (114) verbunden ist und die Bremsdruckverteilung (ϕ) über den Fahrzeugbus (114) oder den separaten Bus (115) empfängt.

11. Verfahren nach einem der vorstehenden Ansprüche, wobei die zweite elektronische Steuereinheit (130) basierend auf dem empfangenen redundanten Bremsanforderungs-Signal (SR) oder dem Bremsanforderungs-Signal (S1) an wenigstens einer zweiten elektropneumatischen Steuereinrichtung (150) und/oder der ersten elektropneumatischen Steuereinrichtung (120) Schaltsignale (S2) bereitstellt, derart dass die zweite elektropneumatische Steuereinrichtung (150) und/oder die erste elektropneumatischen Steuereinrichtung (120) wenigsten einen des redundanten Vorderachs-Bremsdrucks (pRVA) und des redundanten Hinterachs-Bremsdrucks (pRVH) aussteuert bzw. aussteuern.

12. Verfahren nach Anspruch 11, wobei die zweite elektronische Steuereinheit (130) die Steuereinheit eines elektropneumatischen Parkbremsmoduls (EPH) ist, und der redundante Hinterachs-Bremsdruck (pRVH) von dem elektropneumatischen Parkbremsmodul (EPH) direkt ausgesteuert wird.

13. Verfahren nach Anspruch 11 oder 12, wobei die zweite elektropneumatische Steuereinrichtung (150) einen redundanten Steuerdruck (pSR) an der ersten elektropneumatischen Steuereinrichtung (120) zum Aussteuern des redundanten Vorderachs-Bremsdrucks (pRVA) bereitstellt.

14. Elektronisch steuerbares pneumatisches Bremssystem (100) für ein Fahrzeug (200), insbesondere Nutzfahrzeug (200), insbesondere ausgebildet zur Durchführung des Verfahrens nach einem der vorhergehenden Ansprüche, wenigstens aufweisend:
- eine erste elektronische Steuereinheit (110) zum Empfangen eines Bremsanforderungs-Signals (S1) zum automatisierten elektronischen Ansteuern von Bremsen (1) in dem Fahrzeug (200), wobei das Bremsanforderungs-Signal (S1) von den Bremsen (1) umzusetzende Anforderungen (aSoll, vSoll) zum Bewirken einer automatisiert angeforderten Fahrzeug-Soll-Längsdynamik (DSoll) übertragen werden, wobei die erste elektronische Steuereinheit (110) dazu ausgebildet ist eine Bremsdruckverteilung (ϕ) zu ermitteln und wenigstens ein erstes Bremsdrucksignal (SB1, SB2) unter Berücksichtigung des Bremsanforderungs-Signals (S1) und der Bremsdruckverteilung (ϕ) bereitzustellen,
- wenigstens eine erste elektropneumatische Steuereinrichtung (120), die mit der ersten elektronischen Steuereinheit (110) zum Empfangen des ersten Bremsdrucksignals (SB1, SB2) verbunden ist, wobei die erste elektropneumatische Steuereinrichtung (120) zum Aussteuern wenigstens des Vorderachs-Bremsdrucks (pVA) und/oder des Hinterachs-Bremsdrucks (pVH) ausgebildet ist;
- eine zweite elektronische Steuereinheit (130), die mit der ersten elektronischen Steuereinheit (110) zum Empfangen der Bremsdruckverteilung (ϕ) und Speichern der erfassten Bremsdruckverteilung (ϕS) verbunden ist;
wobei die zweite elektronische Steuereinheit (130) dazu ausgebildet ist für den Fall, dass das Bremsanforderungs-Signal (S1) nicht oder nicht richtig verarbeitet oder eingelesen werden kann:
- das Bremsanforderungs-Signal (S1) oder ein redundantes Bremsanforderungs-Signals (SR) zu empfangen, und
- in Antwort auf den Empfang des Bremsanforderungs-Signals (S1) oder eines redundanten Bremsanforderungs-Signals (SR) eine Aussteuerung eines redundanten Vorderachs-Bremsdrucks (pRVA) und eines redundanten Hinterachs-Bremsdrucks (pRVH) unter Berücksichtigung der gespeicherten Bremsdruckverteilung (ϕS) zu veranlassen.

15. Elektronisch steuerbares pneumatisches Bremssystem (100) nach Anspruch 14, wobei die zweite elektronische Steuereinheit (130) dazu eingerichtet ist die Bremsdruckverteilung (ϕ) kontinuierlich zu erfassen und zu speichern, solange das Bremsanforderungs-Signal (S1) verarbeitet werden kann.

16. Elektronisch steuerbares pneumatisches Bremssystem (100) nach Anspruch 14 oder 15, wobei die zweite elektronische Steuereinheit (130) dazu eingerichtet ist ein Bremsdruckniveau (pN) zu erfassen und als gespeichertes Bremsdruckniveau (pNS) zu speichern; und
für den Fall, dass das Bremsanforderungs-Signal (S1) nicht oder nicht richtig verarbeitet oder eingelesen werden kann:
- den redundanten Vorderachs-Bremsdruck (pRVA) und den redundanten Hinterachs-Bremsdruck (pRVH) unter Berücksichtigung des gespeicherten Bremsdruckniveaus (pNS) auszusteuern.

17. Elektronisch steuerbares pneumatisches Bremssystem (100) nach Anspruch 16, wobei die zweite elektronische Steuereinheit (130) dazu eingerichtet ist das Bremsdruckniveau (pN) kontinuierlich zu erfassen und zu speichern, solange das Bremsanforderungs-Signal (S1) verarbeitet werden kann.

18. Elektronisch steuerbares pneumatisches Bremssystem (100) nach einem der vorstehenden Ansprüche 14 bis 17, wobei die zweite elektronische Steuereinheit (130) dazu eingerichtet ist:
- eine Antriebsausgangsdrehzahl (nG) zu empfangen; und
- einen Schlupf (SHA) der angetriebenen Achse (HA) basierend auf der empfangenen Antriebsausgangsdrehzahl (nG) zu ermitteln.

19. Elektronisch steuerbares pneumatisches Bremssystem (100) nach einem der vorstehenden Ansprüche 14 bis 18, wobei die zweite elektronische Steuereinheit (130) dazu eingerichtet ist die gespeicherte Bremsdruckverteilung (ϕS) erst dann durch eine erfasste Bremsdruckverteilung (ϕ) in dem Speicher (140) zu überschreiben, wenn ein gültiges Bremsanforderungs-Signal (S1) eingelesen und richtig verarbeitet werden kann.

20. Elektronisch steuerbares pneumatisches Bremssystem (100) nach einem der vorstehenden Ansprüche 14 bis 19, aufweisend einen Parkbremsschalter (HCU), ein Bremspedal (BST) und/oder eine weitere elektronische Steuereinheit (160) zum Bereitstellen des redundanten Bremsanforderungs-Signals (SR).

21. Elektronisch steuerbares pneumatisches Bremssystem (100) nach einem der vorstehenden Ansprüche 14 bis 20, wobei die erste elektronische Steuereinheit (110) dazu ausgebildet ist das Bremsanforderungs-Signal (S1) zu empfangen, und ferner dazu ausgebildet ist die Bremsdruckverteilung (ϕ) zu empfangen oder basierend auf empfangenen Daten und/oder internen Daten zu ermitteln und die ermittelte Bremsdruckverteilung (ϕ) bereitzustellen.

22. Elektronisch steuerbares pneumatisches Bremssystem (100) nach einem der vorstehenden Ansprüche 14 bis 21, wobei die zweite elektronische Steuereinheit (130) mit einem separaten Bus (115) oder dem Fahrzeugbus (114) verbunden ist und dazu ausgebildet ist die Bremsdruckverteilung (ϕ) über den Fahrzeugbus (114) oder den separaten Bus (115) zu empfangen.

23. Elektronisch steuerbares pneumatisches Bremssystem (100) nach einem der vorstehenden Ansprüche 14 bis 22, wobei die zweite elektronische Steuereinheit (130) dazu ausgebildet ist basierend auf dem empfangenen redundanten Bremsanforderungs-Signal (SR) oder dem Bremsanforderungs-Signal (S1) an wenigstens einer zweiten elektropneumatischen Steuereinrichtung (150) und/oder der ersten elektropneumatischen Steuereinrichtung (120) Schaltsignale (S2) bereitzustellen, derart dass die zweite elektropneumatische Steuereinrichtung (150) und/oder die erste elektropneumatische Steuereinrichtung (120) wenigsten einen des redundanten Vorderachs-Bremsdrucks (pRVA) und des redundanten Hinterachs-Bremsdrucks (pRVH) aussteuert bzw. aussteuern.

24. Elektronisch steuerbares pneumatisches Bremssystem (100) nach Anspruch 23, wobei die zweite elektronische Steuereinheit (130) die Steuereinheit eines elektropneumatischen Parkbremsmoduls (EPH) ist, welches dazu ausgebildet ist den redundanten Hinterachs-Bremsdruck (pRVH) direkt auszusteuern.

25. Elektronisch steuerbares pneumatisches Bremssystem (100) nach Anspruch 23 oder 24, wobei die zweite elektropneumatische Steuereinrichtung (150) dazu eingerichtet ist einen redundanten Steuerdruck (pSR) an der ersten elektropneumatischen Steuereinrichtung (120) zum Aussteuern des redundanten Vorderachs-Bremsdrucks (pRVA) bereitzustellen.

26. Fahrzeug (200), insbesondere Nutzfahrzeug (200), mit einem elektronisch gesteuerten pneumatischen Bremssystem (100) nach einem der Ansprüche 14 bis 25, insbesondere geeignet zur Durchführung eines Verfahrens nach einem der Ansprüche 1 bis 13.

## Claims

1. Method for the automated electronic control of a brake system (100) in a vehicle (200), in particular a utility vehicle (200), comprising at least the steps of:
- reading a brake request signal (S1) for the automated electronic actuation of brakes (1) in the vehicle (200), wherein requests (aSoll, vSoll) to be implemented by the brakes (1) are transmitted via the brake request signal (S1) in order to bring about automatically requested vehicle target longitudinal dynamics (DSoll);
- determining a brake pressure distribution (ϕ) indicating a ratio of a front-axle brake pressure (pVA) of a front axle (VA) and a rear-axle brake pressure (pVH) of a rear axle (HA);
- providing at least a first brake pressure signal (SB1, SB2) from a first electronic control unit (110) to at least a first electropneumatic control device (120) taking into account the brake request signal (S1) and the brake pressure distribution (ϕ) in order to modulate at least the front-axle brake pressure (pVA) and the rear-axle brake pressure (pVH);
- receiving the brake pressure distribution (ϕ) at a second electronic control unit (130) and storing the detected brake pressure distribution (ϕS); and in the event that the brake request signal (S1) cannot be or cannot be correctly processed or read:
- receiving the brake request signal (S1) or a redundant brake request signal (SR) at the second electronic control unit (130), and
- in response to the reception of the brake request signal (S1) or the redundant brake request signal (SR) at the second electronic control unit (130), modulating a redundant front-axle brake pressure (pRVA) and a redundant rear-axle brake pressure (pRVH) taking into account the stored brake pressure distribution (ϕS).

2. Method according to claim 1, wherein the brake pressure distribution (ϕ) is continuously detected and stored at the second control unit (130).

3. Method according to either claim 1 or claim 2, including the steps of:
- receiving a brake pressure level (pN) at the second electronic control unit (130) and storing the detected brake pressure level (pNS); and in the event that the brake request signal (S1) cannot be or cannot be correctly processed or read:
- modulating the redundant front-axle brake pressure (pRVA) and the redundant rear-axle brake pressure (pRVH) taking into account the stored brake pressure level (pNS).

4. Method according to claim 3, wherein the brake pressure level (pN) is continuously detected and stored at the second control unit (130).

5. Method according to any of the preceding claims, wherein a timeout signal (TS) and/or a transmitted fault state signal (FS) is detected at the second electronic control unit (130) in the event that the brake request signal (S1) is not or is not correctly processed or read.

6. Method according to any of the preceding claims, including:
- receiving a drive output speed (nG) at the second electronic control unit (130); and
- determining a slip (SHA) of the driven axle (HA) on the basis of the received drive output speed (nG).

7. Method according to any of the preceding claims, wherein the stored brake pressure distribution (ϕS) is overwritten by a detected brake pressure distribution (ϕ) in the memory (140) only if a valid brake request signal (S1) is again read and correctly processed.

8. Method according to any of the preceding claims, wherein the redundant brake request signal (SR) is provided by a parking brake switch (HCU), a brake pedal (BST), or a further electronic control unit (160).

9. Method according to any of the preceding claims, wherein the reading of the brake request signal (S1) is performed by the first electronic control unit (110), and wherein the first electronic control unit (110) receives the brake pressure distribution (ϕ) or determines said brake pressure distribution on the basis of received data and/or internal data and provides the determined brake pressure distribution (ϕ).

10. Method according to any of the preceding claims, wherein the second electronic control unit (130) is connected to a separate bus (115) or the vehicle bus (114) and receives the brake pressure distribution (ϕ) via the vehicle bus (114) or the separate bus (115).

11. Method according to any of the preceding claims, wherein the second electronic control unit (130) provides switching signals (S2) to at least a second electropneumatic control device (150) and/or the first electropneumatic control device (120) on the basis of the received redundant brake request signal (SR) or the brake request signal (S1), such that the second electropneumatic control device (150) and/or the first electropneumatic control device (120) modulates or modulate at least one of the redundant front-axle brake pressure (pRVA) and the redundant rear-axle brake pressure (pRVH).

12. Method according to claim 11, wherein the second electronic control unit (130) is the control unit of an electropneumatic parking brake module (EPH), and the redundant rear-axle brake pressure (pRVH) is directly modulated by the electropneumatic parking brake module (EPH).

13. Method according to either claim 11 or claim 12, wherein the second electropneumatic control device (150) provides a redundant control pressure (pSR) to the first electropneumatic control device (120) in order to modulate the redundant front-axle brake pressure (pRVA).

14. Electronically controllable pneumatic brake system (100) for a vehicle (200), in particular a utility vehicle (200), in particular designed to carry out the method according to any of the preceding claims, at least comprising:
- a first electronic control unit (110) for receiving a brake request signal (S1) for the automated electronic actuation of brakes (1) in the vehicle (200), wherein requests (aSoll, vSoll) to be implemented by the brakes (1) are transmitted the brake request signal (S1) in order to bring about automatically requested vehicle target longitudinal dynamics (DSoll), wherein the first electronic control unit (110) is designed to determine a brake pressure distribution (ϕ) and to provide at least a first brake pressure signal (SB1, SB2) taking into account the brake request signal (S1) and the brake pressure distribution (ϕ),
- at least a first electropneumatic control device (120), which is connected to the first electronic control unit (110) for receiving the first brake pressure signal (SB1, SB2), wherein the first electropneumatic control device (120) is designed to modulate at least the front-axle brake pressure (pVA) and/or the rear-axle brake pressure (pVH);
- a second electronic control unit (130), which is connected to the first electronic control unit (110) for receiving the brake pressure distribution (ϕ) and storing the detected brake pressure distribution (cpS);
wherein the second electronic control unit (130) is designed, in the event that the brake request signal (S1) cannot be or cannot be correctly processed or read:
- to receive the brake request signal (S1) or a redundant brake request signal (SR), and
- in response to the reception of the brake request signal (S1) or a redundant brake request signal (SR), to cause a redundant front-axle brake pressure (pRVA) and a redundant rear-axle brake pressure (pRVH) to be modulated taking into account the stored brake pressure distribution (cpS).

15. Electronically controllable pneumatic brake system (100) according to claim 14, wherein the second electronic control unit (130) is designed to continuously detect and store the brake pressure distribution (ϕ) as long as the brake request signal (S1) can be processed.

16. Electronically controllable pneumatic brake system (100) according to either claim 14 or claim 15, wherein the second electronic control unit (130) is designed to detect a brake pressure level (pN) and to store said level as a stored brake pressure level (pNS); and
in the event that the brake request signal (S1) cannot be or cannot be correctly processed or read:
- to modulate the redundant front-axle brake pressure (pRVA) and the redundant rear-axle brake pressure (pRVH) taking into account the stored brake pressure level (pNS).

17. Electronically controllable pneumatic brake system (100) according to claim 16, wherein the second electronic control unit (130) is designed to continuously detect and store the brake pressure level (pN) as long as the brake request signal (S1) can be processed.

18. Electronically controllable pneumatic brake system (100) according to any of the preceding claims 14 to 17, wherein the second electronic control unit (130) is designed:
- to receive a drive output speed (nG); and
- to determine a slip (SHA) of the driven axle (HA) on the basis of the received drive output speed (nG).

19. Electronically controllable pneumatic brake system (100) according to any of the preceding claims 14 to 18, wherein the second electronic control unit (130) is designed to overwrite the stored brake pressure distribution (ϕS) with a detected brake pressure distribution (ϕ) in the memory (140) only if a valid brake request signal (S1) can be read and correctly processed.

20. Electronically controllable pneumatic brake system (100) according to any of the preceding claims 14 to 19, comprising a parking brake switch (HCU), a brake pedal (BST) and/or a further electronic control unit (160) for providing the redundant brake request signal (SR).

21. Electronically controllable pneumatic brake system (100) according to any of the preceding claims 14 to 20, wherein the first electronic control unit (110) is designed to receive the brake request signal (S1) and is further designed to receive the brake pressure distribution (ϕ) or to determine said distribution on the basis of received data and/or internal data and to provide the determined brake pressure distribution (ϕ).

22. Electronically controllable pneumatic brake system (100) according to any of the preceding claims 14 to 21, wherein the second electronic control unit (130) is connected to a separate bus (115) or the vehicle bus (114) and is designed to receive the brake pressure distribution (ϕ) via the vehicle bus (114) or the separate bus (115).

23. Electronically controllable pneumatic brake system (100) according to any of the preceding claims 14 to 22, wherein the second electronic control unit (130) is designed to provide switching signals (S2) to at least a second electropneumatic control device (150) and/or the first electropneumatic control device (120) on the basis of the received redundant brake request signal (SR) or the brake request signal (S1), such that the second electropneumatic control device (150) and/or the first electropneumatic control device (120) modulates or modulate at least one of the redundant front-axle brake pressure (pRVA) and the redundant rear-axle brake pressure (pRVH).

24. Electronically controllable pneumatic brake system (100) according to claim 23, wherein the second electronic control unit (130) is the control unit of an electropneumatic parking brake module (EPH), which is designed to directly modulate the redundant rear-axle brake pressure (pRVH).

25. Electronically controllable pneumatic brake system (100) according to either claim 23 or claim 24, wherein the second electropneumatic control device (150) is designed to provide a redundant control pressure (pSR) to the first electropneumatic control device (120) in order to modulate the redundant front-axle brake pressure (pRVA).

26. Vehicle (200), in particular a utility vehicle (200), comprising an electronically controlled pneumatic brake system (100) according to any of claims 14 to 25, in particular suitable for carrying out a method according to any of claims 1 to 13.

## Revendications

1. Procédé de commande électronique automatisée d'un système de freinage (100) dans un véhicule (200), en particulier un véhicule utilitaire (200), comprenant au moins les étapes suivantes :
- lecture d'un signal de demande de freinage (S1) pour la commande électronique automatisée de freins (1) dans le véhicule (200), dans lequel des demandes (aSoll, vSoll) de mise en oeuvre par les freins (1) sont transmises par le biais du signal de demande de freinage (S1) pour provoquer une dynamique longitudinale de consigne de véhicule (DSoll) demandée de manière automatisée ;
- détermination d'une répartition de pression de freinage (ϕ), qui indique un rapport d'une pression de freinage d'essieu avant (pVA) d'un essieu avant (VA) à une pression de freinage d'essieu arrière (pVH) d'un essieu arrière (HA) ;
- fourniture d'au moins un premier signal de pression de freinage (SB1, SB2) d'une première unité de commande électronique (110) à au moins un premier dispositif de commande électropneumatique (120) en tenant compte du signal de demande de freinage (S1) et de la répartition de pression de freinage (ϕ) pour la commande d'au moins la pression de freinage d'essieu avant (pVA) et de la pression de freinage d'essieu arrière (pVH) ;
- réception de la répartition de pression de freinage (ϕ) au niveau d'une seconde unité de commande électronique (130) et enregistrement de la répartition de pression de freinage (cpS) détectée ; et dans le cas où le signal de demande de freinage (S1) ne peut être traité ou lu ou ne peut l'être correctement :
- réception du signal de demande de freinage (S1) ou d'un signal de demande de freinage redondant (SR) au niveau de la seconde unité de commande électronique (130), et
- en réponse à la réception du signal de demande de freinage (S1) ou du signal de demande de freinage redondant (SR) au niveau de la seconde unité de commande électronique (130), commande d'une pression de freinage redondante d'essieu avant (pRVA) et d'une pression de freinage redondante d'essieu arrière (pRVH) en tenant compte de la répartition de pression de freinage (ϕS) enregistrée.

2. Procédé selon la revendication 1, dans lequel la répartition de pression de freinage (ϕ) au niveau de la seconde unité de commande (130) est détectée et enregistrée de façon continue.

3. Procédé selon la revendication 1 ou 2, comprenant les étapes suivantes :
- réception d'un niveau de pression de freinage (pN) au niveau de la seconde unité de commande électronique (130) et enregistrement du niveau de pression de freinage (pNS) détecté ; et dans le cas où le signal de demande de freinage (S1) ne peut être traité ou lu ou ne peut l'être correctement :
- commande de la pression de freinage redondante d'essieu avant (pRVA) et de la pression de freinage redondante d'essieu arrière (pRVH) en tenant compte du niveau de pression de freinage (pNS) enregistré.

4. Procédé selon la revendication 3, dans lequel le niveau de pression de freinage (pN) au niveau de la seconde unité de commande (130) est détecté et enregistré de façon continue.

5. Procédé selon l'une des revendications précédentes, dans lequel, dans le cas où le signal de demande de freinage (S1) ne peut être traité ou lu ou ne peut l'être correctement, un signal de dépassement de temps imparti (TS) et/ou un signal d'état d'erreur (FS) transmis est détecté au niveau de la seconde unité de commande électronique (130).

6. Procédé selon l'une des revendications précédentes, comprenant :
- la réception d'une vitesse de sortie d'entraînement (nG) au niveau de la seconde unité de commande électronique (130) ; et
- la détermination d'un patinage (SHA) de l'essieu moteur (HA) sur la base de la vitesse de sortie d'entraînement (nG) reçue.

7. Procédé selon l'une des revendications précédentes, dans lequel la répartition de pression de freinage (ϕS) enregistrée n'est remplacée dans la mémoire (140) par une répartition de pression de freinage (ϕ) détectée que lorsqu'un signal de demande de freinage (S1) valide est à nouveau lu et traité correctement.

8. Procédé selon l'une des revendications précédentes, dans lequel le signal de demande de freinage redondant (SR) est fourni par un commutateur de frein de stationnement (HCU), une pédale de frein (BST) ou une unité de commande électronique supplémentaire (160).

9. Procédé selon l'une des revendications précédentes, dans lequel la lecture du signal de demande de freinage (S1) est exécutée par la première unité de commande électronique (110), et dans lequel la première unité de commande électronique (110) reçoit la répartition de pression de freinage (ϕ) ou la détermine sur la base de données reçues et/ou de données internes et fournit la répartition de pression de freinage (ϕ) déterminée.

10. Procédé selon l'une des revendications précédentes, dans lequel la seconde unité de commande électronique (130) est connectée à un bus séparé (115) ou au bus de véhicule (114) et reçoit la répartition de pression de freinage (ϕ) par l'intermédiaire du bus de véhicule (114) ou du bus séparé (115).

11. Procédé selon l'une des revendications précédentes, dans lequel la seconde unité de commande électronique (130), sur la base du signal de demande de freinage redondant (SR) reçu ou du signal de demande de freinage (S1), fournit des signaux de commutation (S2) à au moins un second dispositif de commande électropneumatique (150) et/ou au premier dispositif de commande électropneumatique (120), de sorte que le second dispositif de commande électropneumatique (150) et/ou le premier dispositif de commande électropneumatique (120) commande ou commandent au moins une de la pression de freinage redondante d'essieu avant (pRVA) et la pression de freinage redondante d'essieu arrière (pRVH).

12. Procédé selon la revendication 11, dans lequel la seconde unité de commande électronique (130) est l'unité de commande d'un module de frein de stationnement électropneumatique (EPH), et la pression de freinage redondante d'essieu arrière (pRVH) est directement commandée par le module de frein de stationnement électropneumatique (EPH).

13. Procédé selon la revendication 11 ou 12, dans lequel le second dispositif de commande électropneumatique (150) fournit une pression de commande redondante (pSR) au premier dispositif de commande électropneumatique (120) pour la commande de la pression de freinage redondante d'essieu avant (pRVA).

14. Système de freinage pneumatique (100) à commande électronique pour un véhicule (200), en particulier un véhicule utilitaire (200), en particulier conçu pour la mise en oeuvre du procédé selon l'une des revendications précédentes, présentant au moins :
- une première unité de commande électronique (110) destinée à recevoir un signal de demande de freinage (S1) pour la commande électronique automatisée de freins (1) dans le véhicule (200), dans lequel des demandes (aSoll, vSoll) de mise en oeuvre par les freins (1) sont transmises par le biais du signal de demande de freinage (S1) pour provoquer une dynamique longitudinale de consigne de véhicule (DSoll) demandée de manière automatisée, dans lequel la première unité de commande électronique (110) est conçue pour déterminer une répartition de pression de freinage (ϕ) et fournir au moins un premier signal de pression de freinage (SB1, SB2) en tenant compte du signal de demande de freinage (S1) et de la répartition de pression de freinage (ϕ),
- au moins un premier dispositif de commande électropneumatique (120) connecté à la première unité de commande électronique (110) pour la réception du premier signal de pression de freinage (SB1, SB2), dans lequel le premier dispositif de commande électropneumatique (120) est conçu pour commander au moins la pression de freinage d'essieu avant (pVA) et/ou la pression de freinage d'essieu arrière (pVH) ;
- une seconde unité de commande électronique (130) connectée à la première unité de commande électronique (110) pour la réception de la répartition de pression de freinage (ϕ) et l'enregistrement de la répartition de pression de freinage (ϕS) détectée ;
dans lequel la seconde unité de commande électronique (130) est conçue, dans le cas où le signal de demande de freinage (S1) ne peut être traité ou lu ou ne peut l'être correctement, pour :
- recevoir le signal de demande de freinage (S1) ou un signal de demande de freinage redondant (SR), et
- en réponse à la réception du signal de demande de freinage (S1) ou d'un signal de demande de freinage redondant (SR), initier une commande d'une pression de freinage redondante d'essieu avant (pRVA) et d'une pression de freinage redondante d'essieu arrière (pRVH) en tenant compte de la répartition de pression de freinage (cpS) enregistrée.

15. Système de freinage pneumatique (100) à commande électronique selon la revendication 14, dans lequel la seconde unité de commande électronique (130) est conçue pour détecter et enregistrer de façon continue la répartition de pression de freinage (ϕ) tant que le signal de demande de freinage (S1) peut être traité.

16. Système de freinage pneumatique (100) à commande électronique selon la revendication 14 ou 15, dans lequel la seconde unité de commande électronique (130) est conçue pour détecter un niveau de pression de freinage (pN) et pour l'enregistrer comme niveau de pression de freinage (pNS) enregistré ; et
dans le cas où le signal de demande de freinage (S1) ne peut être traité ou lu ou ne peut l'être correctement, pour :
- commander la pression de freinage redondante d'essieu avant (pRVA) et la pression de freinage redondante d'essieu arrière (pRVH) en tenant compte du niveau de pression de freinage (pNS) enregistré.

17. Système de freinage pneumatique (100) à commande électronique selon la revendication 16, dans lequel la seconde unité de commande électronique (130) est conçue pour détecter et enregistrer de façon continue le niveau de pression de freinage (pN) tant que le signal de demande de freinage (S1) peut être traité.

18. Système de freinage pneumatique (100) à commande électronique selon l'une des revendications 14 à 17, dans lequel la seconde unité de commande électronique (130) est conçue pour :
- recevoir une vitesse de sortie d'entraînement (nG) ; et
- déterminer un patinage (SHA) de l'essieu moteur (HA) sur la base du signal de sortie d'entraînement (nG) reçu.

19. Système de freinage pneumatique (100) à commande électronique selon l'une des revendications 14 à 18, dans lequel la seconde unité de commande électronique (130) est conçue pour ne remplacer dans la mémoire (140) la répartition de pression de freinage (ϕS) enregistrée par une répartition de pression de freinage (ϕ) détectée que lorsqu'un signal de demande de freinage (S1) valide peut être lu et traité correctement.

20. Système de freinage pneumatique (100) à commande électronique selon l'une des revendications 14 à 19, présentant un commutateur de frein de stationnement (HCU), une pédale de frein (BST) et/ou une unité de commande électronique supplémentaire (160) afin de fournir le signal de demande de freinage redondant (SR).

21. Système de freinage pneumatique (100) à commande électronique selon l'une des revendications 14 à 20, dans lequel la première unité de commande électronique (110) est conçue pour recevoir le signal de demande de freinage (S1), et en outre conçue pour recevoir la répartition de pression de freinage (ϕ) ou pour la déterminer sur la base de données reçues et/ou de données internes et pour fournir la répartition de pression de freinage (ϕ) déterminée.

22. Système de freinage pneumatique (100) à commande électronique selon l'une des revendications 14 à 21, dans lequel la seconde unité de commande électronique (130) est connectée à un bus séparé (115) ou au bus de véhicule (114) et est conçue pour recevoir la répartition de pression de freinage (ϕ) par l'intermédiaire du bus de véhicule (114) ou du bus séparé (115).

23. Système de freinage pneumatique (100) à commande électronique selon l'une des revendications 14 à 22, dans lequel la seconde unité de commande électronique (130) est conçue pour fournir, sur la base du signal de demande de freinage redondant (SR) reçu ou du signal de demande de freinage (S1), des signaux de commutation (S2) à au moins un second dispositif de commande électropneumatique (150) et/ou au premier dispositif de commande électropneumatique (120), de sorte que le second dispositif de commande électropneumatique (150) et/ou le premier dispositif de commande électropneumatique (120) commande ou commandent au moins une de la pression de freinage redondante d'essieu avant (pRVA) et la pression de freinage redondante d'essieu arrière (pRVH).

24. Système de freinage pneumatique (100) à commande électronique selon la revendication 23, dans lequel la seconde unité de commande électronique (130) est l'unité de commande d'un module de frein de stationnement électropneumatique (EPH), lequel est conçu pour commander directement la pression de freinage redondante d'essieu arrière (pRVH).

25. Système de freinage pneumatique (100) à commande électronique selon la revendication 23 ou 24, dans lequel le second dispositif de commande électropneumatique (150) est conçu pour fournir une pression de commande redondante (pSR) au premier dispositif de commande électropneumatique (120) pour la commande de la pression de freinage redondante d'essieu avant (pRVA).

26. Véhicule (200), en particulier véhicule utilitaire (200), comportant un système de freinage pneumatique (100) à commande électronique selon l'une des revendications 14 à 25, en particulier adapté pour la mise en oeuvre d'un procédé selon l'une des revendications 1 à 13.
